# EUROPEAN PATENT APPLICATION

(11) **EP 1 302 882 A1**
(43) Date of publication of application: **16.04.2003**
(21) Application number: 01932309.6
(22) Date of filing: 28.05.2001
(51) Int. Cl.: G06F 17/60

(54) **RENTAL SYSTEM OF DIGITAL CONTENT**

(30) Priority: 30.05.2000 JP 2000159669; 25.05.2001 JP 2001157115
(71) Applicant: Okamoto, Akiyoshi, Yoshino-gun, Nara 639-3114 (JP)
(72) Inventor: Okamoto, Akiyoshi, Yoshino-gun, Nara 639-3114 (JP)
(74) Representative: Beresford, Keith Denis Lewis
(86) International application number: JP0104477
(87) International publication number: WO01093134

(57) **Abstract**

[Problem to be solved] To rent a digital contents such as a movie or the like easily without a case in which the digital contents cannot be rented as it was rented by someone else.

[Constitution] There are provided a step S1 of downloading a reproduction software capable of reproducing a predetermined format of digital contents into a computer 110 of a user member 100, a step S2 of downloading the digital contents which can be reproduced by the reproduction software into the computer 110, and a step S3 of measuring time since the digital contents was downloaded into the computer and deleting the digital contents from the computer if a predetermined time has elapsed, and at least one part of the storeddigital contents is overwritten by the deleting program so as not be reproduced by the reproducing program.

## Description

### [FIELD OF THE INVENTION]

The present invention relates to a rental system of digital contents, a rental method of digital contents and a server for renting digital contents, which are provided for renting the digital contents such as a movie, a music composition or a computer game.

### [BACKGROUND ART]

Recently, a computer has been widely spread and its performance has been remarkably improved. Consequently, a movie or music, for example which has been reproduced through a video cassette recorder or a CD player before can be reproduced through a computer. For example, a movie recorded on a DVD can be reproduced through a computer incorporating a DVD reproduction software.

However, you had to purchase or rent the DVD on which a movie is recorded at a store in order to watch the movie recorded on the DVD. More specifically, it was necessary for a user to go down to a shop in the neighborhood. In addition, even if the user goes down to the shop, the desired DVD could be already rented by someone else.

The present invention was made in view of the above-described circumstances, and it is an object to provide a rental method for renting a digital contents such as a movie easily and preventing a case in which a desired one cannot be rented as it was rented already by someone else.

### [Disclosure of Invention]

A rental system of a digital contents according to the present invention comprises a server which stores a plurality of predetermined format of digital contents and a reproduction software capable of reproducing the digital contents, and a computer of user to which the reproduction software and the digital contents are downloaded from the server, and the reproduction software incorporates a reproducing program for reproducing the digital contents, a measuring program for measuring time since the digital contents was downloaded to the computer of the user from the server and a deleting program for deleting the digital contents from the computer of the user if a predetermined time has elapsed after the downloading.

In addition, a rental method of a digital contents according to the present invention comprises a step of installing a reproduction software capable of reproducing a predetermined format of digital contents into a computer of a user, a step of downloading the digital contents which can be reproduced by the reproduction software into the computer, and a step of measuring time since the digital contents was downloaded into the computer and deleting the digital contents from the computer if a predetermined time has elapsed, and a measuring program for measuring the time and a deleting program for deleting the digital contents are incorporated in the reproduction software.

Furthermore, according to a server for renting a digital contents in accordance with the present invention, the server stores a plurality of predetermined format of digital contents and a reproduction software capable of reproducing the digital contents and downloads the reproduction software and the digital contents to a computer when it accesses the server and the reproduction software measures time since the digital contents is downloaded to the computer and deletes the digital contents by a deleting program incorporated in the reproduction software if a predetermined time has elapsed.

### [Brief description of Drawings]

Fig. 1 is a schematic flowchart showing procedures for a rental method in accordance with the present invention.
Fig. 2 is a schematic composition drawing of the rental method of the digital contents in accordance with the present invention.
Fig. 3 is a schematic flowchart showing procedures for registering a member and installing a reproduction software of the rental method of the digital contents in accordance with the present invention.
Fig. 4 is a schematic explanatory drawing of screens displayed on a computer of the member at the time of registering the member and installing the reproduction software of the rental method of the digital contents in accordance with the present invention.
Fig. 5 is a flowchart showing procedures for renting the digital contents of the rental method of the digital contents in accordance with the present invention.
Fig. 6 is a schematic explanatory drawing of screens displayed on the computer of the member at the time of renting the digital contents of the rental method of the digital contents in accordance with the present invention.
Fig. 7 is a schematic flowchart showing procedures for reproducing and deleting the digital contents of the rental method of the digital contents in accordance with the present invention.
Fig. 8 is a schematic explanatory drawing of screens displayed on the computer of the member at the time of reproducing and deleting the digital contents of the rental method of the digital contents in accordance with the present invention.

### [Explanation of reference numerals and signs in the drawings]

100 member
110 computer
200 rental agency
300 internet
400 telephone line

### [Best embodiment of the Invention]

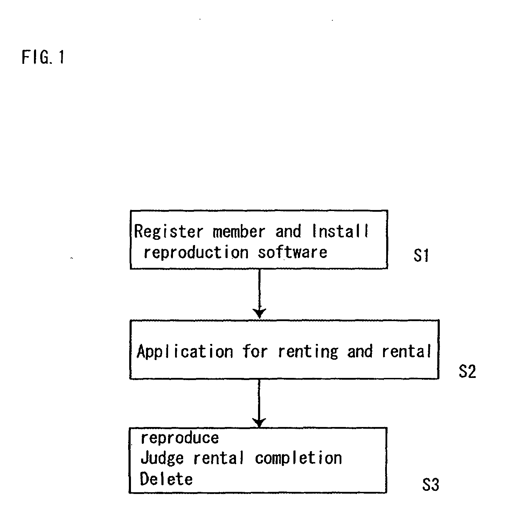

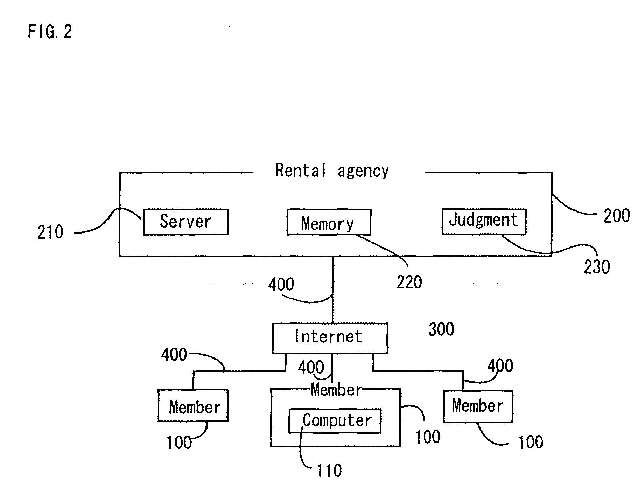

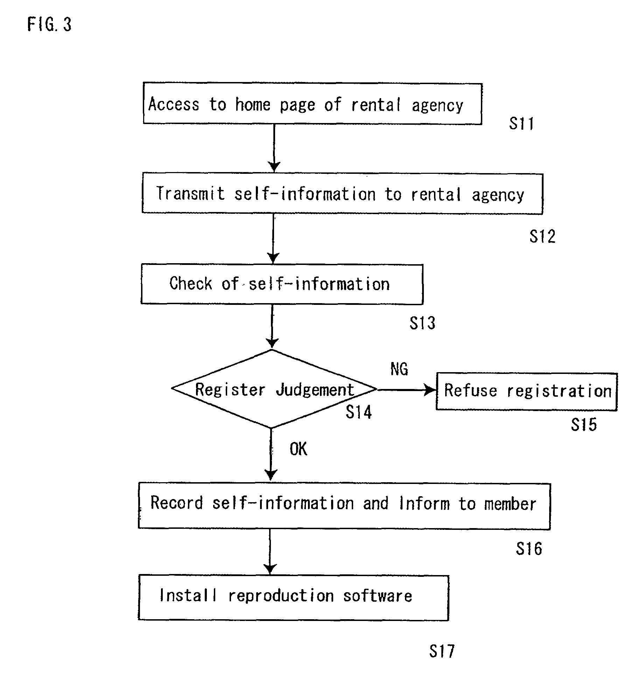

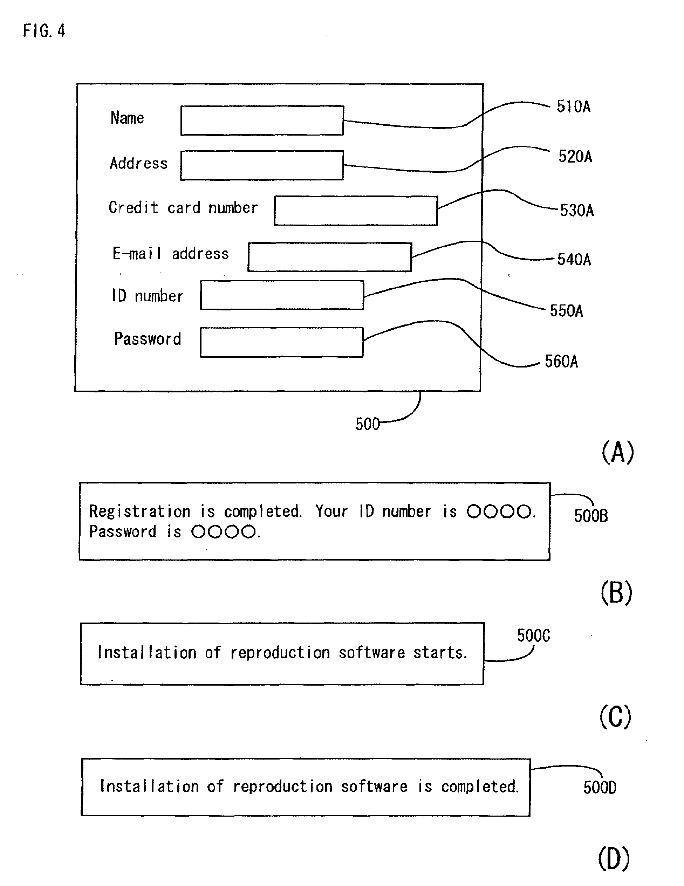

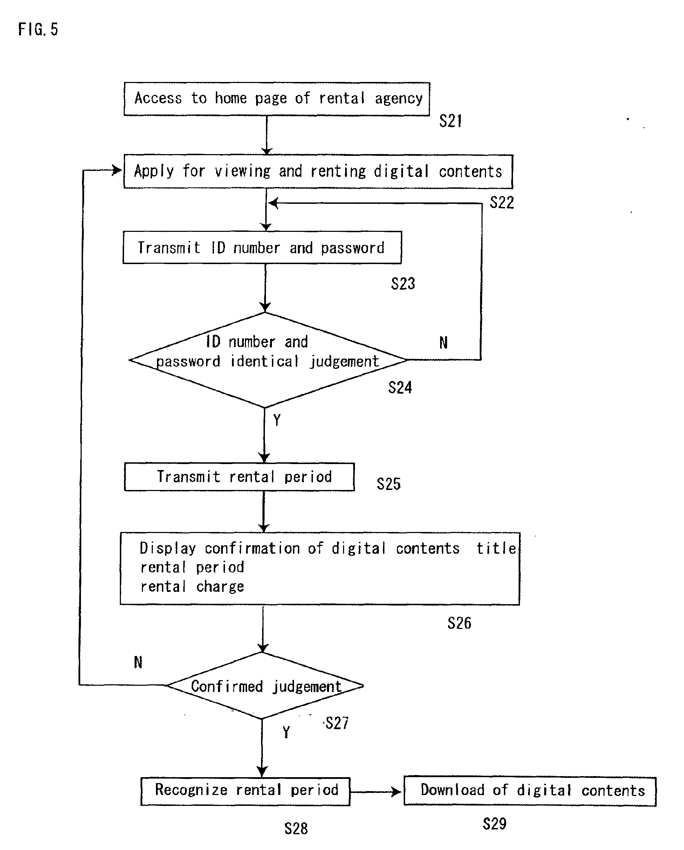

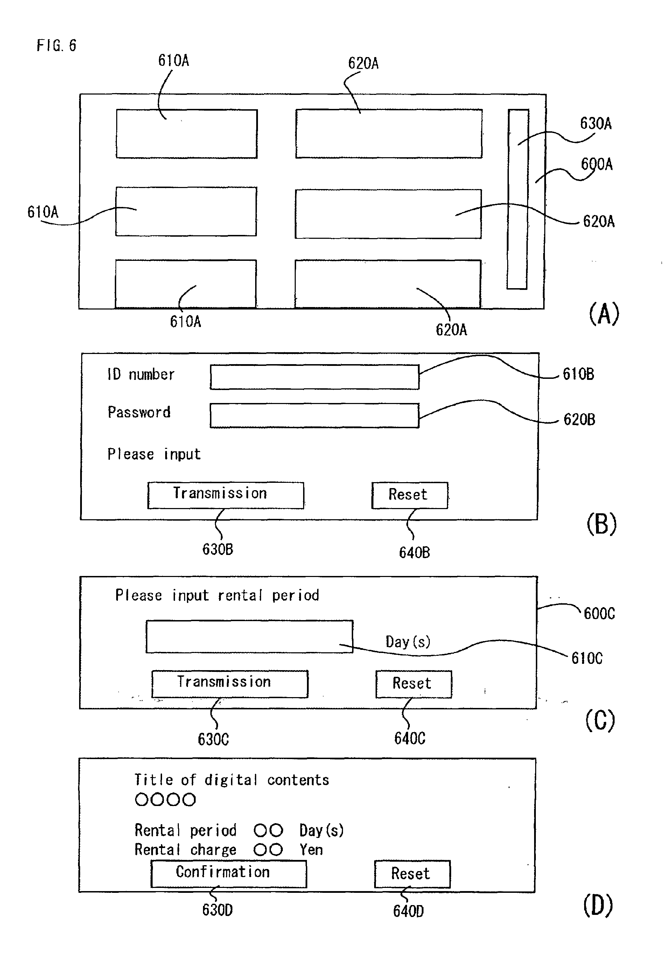

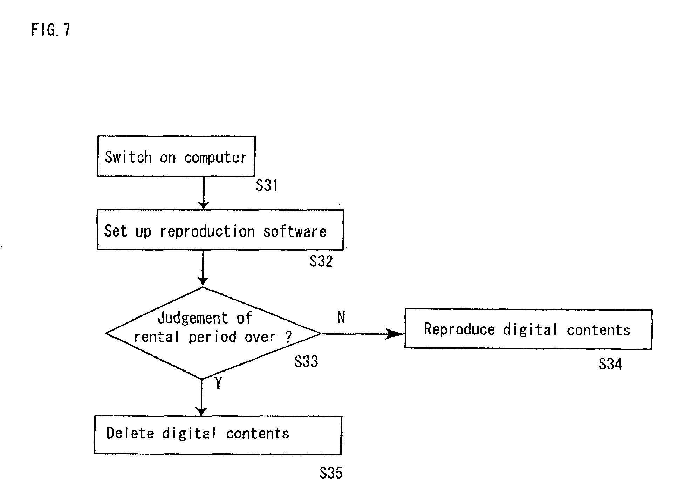

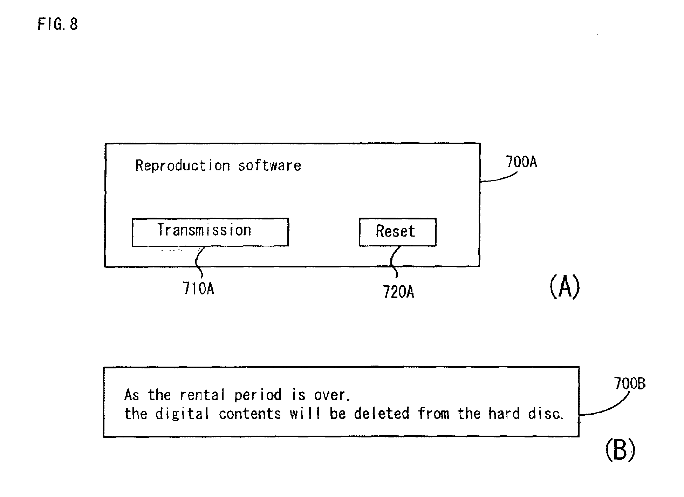

Fig. 1 is a schematic flowchart showing procedures for a rental method in accordance with the present invention, Fig. 2 is a schematic composition drawing of the rental method of the digital contents in accordance with the present invention, Fig. 3 is a schematic flowchart showing procedures for registering a member and installing a reproduction software of the rental method of the digital contents in accordance with the present invention, Fig. 4 is a schematic explanatory drawing of screens displayed on a computer of the member at the time of registering the member and installing the reproduction software of the rental method of the digital contents in accordance with the present invention, Fig. 5 is a flowchart showing procedures for renting the digital contents of the rental method of the digital contents in accordance with the present invention, Fig. 6 is a schematic explanatory drawing of screens displayed on the computer of the member at the time of renting the digital contents of the rental method of the digital contents in accordance with the present invention, Fig. 7 is a schematic flowchart showing procedure for reproducing and deleting the digital contents of the rental method of the digital contents in accordance with the present invention, and Fig. 8 is a schematic explanatory drawing of screens displayed on the computer of the member at the time of reproducing and deleting the digital contents of the rental method of the digital contents in accordance with the present invention.

A rental method of a digital contents in accordance with the present invention comprises a step S1 of installing a reproduction software capable of reproducing a predetermined format of digital contents into a computer 110 used by a member 100, a step S2 of downloading the digital contents which can be reproduced by the reproduction software into the computer 110, and a step S3 of measuring time since the digital contents was downloaded into the computer 110 and deleting the digital contents if a predetermined time has elapsed, and a program for deleting the digital contents is incorporated in the reproduction software.

In the following description, a movie which was recorded as a digital signal is given as an example of the digital contents.

The computer 110 of the member 100 used in the rental method of the digital contents is a normal personal computer and comprises a display, CPU, a memory, a hard disc or the like. The computer 110 is connected to a telephone line 400 through a modem and it can make use of internet 300.

In addition, the computer 110 of the member 100 may comprise a personal digital assistance (so called PDA), a mobile phone or the like in addition to the normal personal computer.

Meanwhile, there is a server 210 in which a number of movie films are recorded as digital signals (digital contents) on the side of a rental agency 200. The server 210 is also connected to the internet 300. In addition, on the side of the rental agency, there is provided a memory 220 which has recorded data regarding to the member 100, for example, a name, an address, a credit card number, an e-mail address, an ID number, a password, the title of film which has ever been rented. In addition, on the side of the rental agency 200, there is provided a judgment part 230 which judges whether it is possible to rent the digital contents or not. Furthermore, the digital contents is encrypted not by a general-purpose reproduction software but by a reproduction software for the exclusive use thereof. In addition, the digital contents is compressed.

In addition, the reproduction software is stored in the server 210.

The rental agency can be accessed through an internet homepage or the like.

Then, a description will be made of procedures for a rental method of the digital contents in accordance with the present invention.

The procedures roughly comprise a procedure for becoming a member, a procedure (step) S1 for installing reproduction software into the computer of the member 100, a procedure (step) S2 for downloading the digital contents into the computer 110 by the member 100 and a procedure (step) S3 for reproducing the digital contents by the member 100 and deleting the digital contents from the computer 110 of the member 100.

First, referring to Figs.3 and 4, a description will be made of the procedure for becoming a member so as to be able to rent the digital contents recorded in the server 210 of the rental agency.

One who wants to register as the member 100 accesses (S11) the homepage (referring to Fig. 4) of the rental agency 200 through the internet 300 and transmits (S12) specified self-information to the rental agency 200.
As shown in Fig. 4(A), there are provided an input part 510A for a name, an input part 520A for an address, an input part 530A for a credit card number to be used at the time of payment of a rental charge, an input part 540A for an e-mail address, an input part 550A for an ID number, and an input part 560A for a password.

The rental agency 200 checks (S13) the self-information and when it permits the register as its member, it records the self-information in the memory 220 and transmits a screen 500B shown in Fig. 4(B) informing that the registration is completed to the new member 100. In this screen, as shown in Fig. 4 (B), the ID number and the password peculiar to the member 100 are also contained. This ID number and the password are the keyword for identifying the member 100. In addition, an inquiry to a credit card company or the like is included in checking the self-information.

In addition, the exclusive reproduction software is installed (S17) by displaying a screen 500C shown in Fig. 4 (C) alongside of the registration of the member. The reproduction software is installed into the computer 110 of the member 100 via the internet through the telephone line 400. Thus, the member 100 can reproduce the digital contents on the computer 110. When the reproduction software is completely installed, the member 100 is informed that the installation is completed by a screen 500D shown in Fig. 4(D).

Then, referring to Figs. 5 and 6, a description will be made of procedures for renting the digital contents by the member 100.

The one registered as the member 100 accesses (S21) the homepage (referring to Fig. 6(A)) of the rental agency 200 through the internet 300. In this homepage, the member can view (S22) a list of digital contents which can be rented, and data showing the detail of the digital contents such as movie's trailer. For example, in a screen 600A shown in Fig. 6(A), there are displayed a window 610A showing the trailer of the digital contents and a window 620A showing literal information describing the detail of the digital contents. In addition, 630A in Fig. 6(A) designates a scroll bar.

When the member encounters the digital contents which the member wants to rent while browsing it, the member applies for (S22) renting to the rental agency. This application is made by cricking the window 610A showing the trailer. When the application ismade, a screen 600B shown in Fig. 6 (B) is displayed. The ID number and the password are inputted into the ID number input part 610B and the password input part 620B shown in the screen 600B, respectively. Then, the ID number and the password are transmitted (S23).

The rental agency checks (S24) whether the transmitted ID number and password are identical with those recorded before and only when they are identical, the procedure proceeds to the next step. In addition, when the ID number or the like is not identical, the rental agency 200 repeatedly requires the member to transmit the ID number and the password. If such a mismatch is repeated a predetermined number of times, it is determined that the access is unlawful and then, the rental agency refuses to rent the digital contents.

A reset button 640B shown in Fig. 6(B) is clicked when the ID number or the like is mistyped or the operation is suspended.

When the ID number and the password transmitted by the member 100 are identical with those recorded in the memory 220 of the rental agency 200, the member 100 inputs and transmits (S25) a desired rental period into an input part 610C for a rental period in a screen 600C shown in Fig. 6(C). This transmission is performed by clicking a transmission button 620C shown in Fig. 6(C). In addition, a reset button 630C shown in Fig. 6(C) is clicked when the rental period is mistyped or the operation is suspended.

When the rental agency 200 receives the rental period, the agency transmits the contents of the title, the rental period and the rental charge of the digital contents to be rented which are displayed on a screen 600D shown in Fig. 6(D) to the computer 110 of the member 100 and requires its confirmation. When the member 100 confirms the title, the rental period and the rental charge of the digital contents to be rented, he clicks a confirmation button 610D.

The confirmed rental period is captured in the reproduction software installed in the computer 110 of the member 100 and the reproduction software recognizes a time limit when the digital contents to be rented should be deleted and transmits (S28) to the rental agency 200 to the effect that the time limit was recognized.

When the rental agency receives the transmission to the effect that the time limit was recognized, the rental agency 200 downloads the desired digital contents to the computer 110 of the member 100 through the telephone line 400 via the internet 300. The downloaded digital contents is stored in a hard disc in the computer 110 of the member 100.

When the digital contents to be rented is reset at the stage of the confirmation of the title or the like of the digital contents, the confirmation is refused by click of a reset button 620D, so that the procedure returns (S27) to the screen showing the data of the digital contents such as the trailer.

Next, referring to Figs.7 and 8, a description will be made of procedures for reproducing the digital contents by the member 100.

When the rented digital contents is reproduced, the computer 110 is switched on (S31) first and then the reproduction software is set up (S32). When the reproduction software was set up, it is confirmed (S33) whether the above-mentioned time limit period is over or not is with a measurement program incorporated in the reproduction software by viewing a real timer clock built in the computer 110 of the member 100. In addition, the real timer clock is operated by an inward power supply such as a lithium battery built in the computer 110, so that operation for current time can be continued even when the main switch of the computer 110 is off.

If the above-mentioned time limit is not over, it is determined it is within the rental period and then, the digital contents is reproduced (S34). The reproduction is started by clicking a reproduction button 710A in a screen 700A shown in Fig. 8(A). In addition, when the digital contents is not reproduced, a reset button 720A is clicked. In addition, while the digital contents is being reproduced, buttons for stopping, pausing, rewinding, fast forwarding or the like are displayed at a lower part of the screen.

In case where the above-mentioned time limit is over, it is determined that the rental period is completed and then the reproduction software deletes (S35) the recorded digital contents with a deleting program while a screen 700B shown in Fig. 7(B) is displayed on the display of the computer 110 of the member 100. In this screen 700B, there is shown a message, for example, "As the rental period is over, the digital contents will be deleted from the hard disc". Thus, a series of rental and reproducing procedures are completed.

According to the above described embodiment, although concept of the rental period is used when it is determined that the digital contents is deleted, concept of the number of times of reproduction may be used. For example, the member 100 previously sets the reproducible number of times at the time of renting the digital contents, counts the number of times of reproduction of the digital contents by the reproduction software (already reproduced number of times) and compare the reproducible number of times with the already reproduced number of times. When the already reproduced number of times exceeds the reproducible number of times, it is determined that the rental period is completed and then, the digital contents stored in the hard disc is deleted and there is displayed a message, for example "As the reproducible number of times is over, the digital contents is deleted from the hard disc".

In addition, at least one part of the stored digital contents may be overwritten by the deleting program so as not to be reproduced by the reproduction software.

Furthermore, the concepts of the rental period and reproducible number of times can be used together, in which case, the digital contents stored in the hard disc may be deleted when either of them is completed.

In addition, although it is determined that the rental period or the like is over or not at the time of setting up the reproduction software in the above description, it may be determined when the main switch of the computer of the member 100 is turned on.

Meanwhile, although the number of the digital contents to be rented is one in the above description, a plurality of digital contents may be rented at the same time. In this case, the rental period (the reproducible number of times) is set for each digital contents and it may be determined that the rental period of the digital contents to be reproduced is over or not when the digital contents is to be reproduced.

In addition, although the reproduction software is installed into the computer 110 of the member 100 from the rental agency 200 through the telephone line 400 in the above description, it may be installed by a recording medium such as a CD-ROM or a floppy disc. In this case, the reproduction software can be distributed for free, for example as a supplement to a magazine, which greatly contributes to widespread of use of the rental method of the digital contents in accordance with the present invention. In this case, the registration as a member can be made either on-line using a telephone line or off-line by forwarding a data entry sheet by mail to the rental agency without using the telephone line.

In addition, although the computer 110 of the member 100 is a normal personal computer in the above description, it may be an exclusive reproducing device for the rental method of the digital contents.

In addition, as information of the digital contents which has ever rented is stored in the memory 220 of the rental agency 200 as member's information, the information may be examined to analyze taste of the member 100. Thus, when a new contents which is determined to suit the member's taste is recorded in the server 210, that information may be e-mailed to the member. Furthermore, the member can previously register his own taste.

Although the movie is used as an example of the digital contents in the above description, the digital contents may include concept such as a musical composition, a TV game software or a computer application software.

In addition, as the procedures described in the detailed description are one example of the rental method of the digital contents in accordance with the present invention, procedures are not limited to this and the order of the procedures can be changed and the screen can be also changed.

In addition, although the information of the digital contents is stored as one in the hard disc of the computer 110 of the user member 100 in the above-described embodiment, it may be divided and stored therein. In this case, the above-described reproduction software needs to contain a dividing program for dividing the downloaded digital contents into a plurality of numbers, an encrypting program for encrypting the divided digital contents divided by the dividing program, and a decrypting and reproducing program for decrypting the one encrypted by the encrypting program and reproducing the divided one in union, in addition to the reproducing program, the measuring program (counting program) and the deleting program.

In addition, a part of the divided and encrypted digital contents may be incorporated in the reproduction software and the others may be stored in a different file format other than the reproduction software.

Furthermore, as the server 210 of the rental agency has a list of the digital contents (which is stored in the memory 220) which were downloaded into the computer 110 of the specific member 100, the digital contents downloaded into the computer 110 of the member 100 who requested to download the digital contents again can be compared with the digital contents described in the list. Only when both are identical, a new digital contents can be downloaded and when both are not identical, the computer of that user is warned about that.

Thus, when a certain member 100 has copied a digital contents which was downloaded by a different member 100, the digital contents described in the list is surely different from that downloaded in the computer of the certain member 100, so that illegal copying activity of the digital contents can be effectively prevented.

In addition, the reproduction software can be installed into a plurality of computers of the member 110, in which case it is desirable that the number of computers of the member 100 with which installation is possible is previously set.

As it is thus structured, even when a certain member 100 has a plurality of computers 110, that is, for example a desktop computer and a portable computer (including PDA, a mobile phone or the like), the digital contents can be downloaded only one time, which is desirable from a viewpoint of user friendliness.

Meanwhile, when a system clock of the computer 110 of the user member 100 is changed, the deleting program could not be implemented even if the rental period is over in reality, so that the digital contents could be illegally rented.

In order to solve the above problem, the time shown by a system clock of the computer 110 may be compared with the time shown by a system clock of the server 210 every time the computer 110 accesses the server 210 and when both are not identical, the time shown by the system clock of the computer 110 may be modified in accordance with the time shown by the system clock of the server 210.

Thus, an illegal rental activity in which the member 100 rewrites the system clock of the computer 110 by himself can be prevented.

In this case, when there is a difference beyond a predetermined allowance between the time shown by the system clock of the computer 110 of the member 100 and the system clock of the server 210, the computer 110 of the member 100 should be at least warned.

The above-mentioned allowance is preferably set by the day, because the rental period is set by the number of days, so that even when the system clock of the computer 110 of the member 100 is changed by a margin within 24 hours, it is thought that damage is little. However, the allowance is not limited to be set by the day.

In addition, regarding to warning toward the computer 110 of the member 100, it may be a warn informing that the further download of the digital contents will not be permitted in addition to a soft warn such as "Your system clock does not keep correct time."

### [Effect of the Invention]

A rental method of digital contents in accordance with the present invention comprises a step of installing a reproduction software capable of reproducing a predetermined format of digital contents into a computer of a user, a step of downloading the digital contents which can be reproduced by the reproduction software into the computer, a step of measuring time since the digital contents was downloaded to the computer and deleting the digital contents from the computer if a predetermined time has elapsed, and a program for measuring the time and a program for deleting the digital contents are incorporated in the reproduction software.

Therefore, according to the rental method of the digital contents, the digital contents can be rented without going to a store. In addition, a case in which a desired digital contents cannot be rented as it was already rented by someone else does not occur. In addition, since there is provided the step of measuring time since the digital contents was downloaded into the computer and deleting the digital contents from the computer if a predetermined time has elapsed, and the program for measuring the time and the program for deleting the digital contents are incorporated in the reproduction software, an amount of data to be transmitted to the computer used by the member and time required for that transmission can be decreased.

Furthermore, another rental method of the digital contents comprises a step of installing a reproduction software capable of reproducing a predetermined format of digital contents into a computer of a user, a step of downloading the digital contents which can be reproduced by the reproduction software into the computer, a step of counting the number of times of reproduction of the digital contents by the reproduction software and deleting the digital contents from the computer if a predetermined number of times is over, and a program for counting the number of times and a program for deleting the digital contents are incorporated in the reproduction software.

This rental method of the digital contents also provides the same effect as described above. In addition, since the concept of the number of times of reproduction is introduced, the time for watching the digital contents can be adjusted more freely.

In addition, if the predetermined time or number of times is set at the time of downloading the digital contents, the user can conveniently adjust a viewing time according to his or her rhythm of living.

## Claims

1. A rental system of a digital contents comprising:
a server which stores a plurality of predetermined format of digital contents and a reproduction software capable of reproducing the digital contents; and
a computer of user to which said reproduction software and said digital contents are downloaded from the server,
**characterized in that** said reproduction software incorporates a reproducing program for reproducing the digital contents, a measuring program for measuring time since the digital contents was downloaded to said computer of the user from the server and a deleting program for deleting said digital contents from said computer of the user if a predetermined time has elapsed after the downloading.

2. A rental system of a digital contents comprising:
a server which stores a plurality of predetermined format of digital contents and a reproduction software capable of reproducing the digital contents; and
a computer of user to which said reproduction software and said digital contents are downloaded from the server,
**characterized in that** said reproduction software incorporates a reproducing program for reproducing the digital contents, a counting program for counting the number of times of reproduction of the digital contents since it was downloaded from the server to said computer of the user, and a deleting program for deleting the digital contents from said computer of the user if the number of times of reproduction exceeds the predetermined number of times.

3. A rental system of a digital contents according to claim 1 or 2, **characterized in that** said predetermined time or number of times is set by the computer of the user when said digital contents is downloaded.

4. A rental system of a digital contents according to claim 1, 2 or 3, **characterized in that** at least one part of the stored digital contents is overwritten by said deleting program so as not to be reproduced by the reproduction software.

5. A rental system of a digital contents according to claim 1, 2, 3 or 4, **characterized in that** said reproduction software can be installed into a plurality of computers of the user and said number of computers with which installation is possible is previously determined.

6. A rental system of a digital contents according to claim 1, 2, 3, 4 or 5, **characterized in that** said reproduction software comprises a dividing program for dividing the downloaded digital contents into a plurality of numbers, an encrypting program for encrypting the digital contents divided by the dividing program, and a decrypting and reproducing program for decrypting the one encrypted by the encrypting program and for reproducing the divided one in union, and one part of the divided and encrypted digital contents is incorporated in the reproduction software and -the others is stored in a different file format.

7. A rental system of a digital contents according to claim 1, 2, 3, 4, 5 or 6, **characterized in that** said server has a list of the digital contents downloaded in the computer of a specific user, compares the digital contents downloaded in the computer of the user who requested the download of the digital contents again with the digital contents in said list, permits the download of a new digital contents only when both are identical, and warns the computer of said user when both are not identical.

8. A rental system of a digital contents according to claim 1, 2, 3, 4, 5, 6 or 7, **characterized in that** said server compares the time shown by a system clock of said computer with the time shown by a system clock of the server every time the computer of the user accesses the server and modifies the time shown by the system clock of said computer in accordance with the time shown by the system clock of the server when both are not identical.

9. A rental system of a digital contents according to claim 8, **characterized in that** when there is a difference beyond a predetermined allowance between the time shown by the system clock of said user and the time shown by the system clock of the server, the computer of the user is at least warned about that.

10. A rental method of a digital contents comprising:
a step of installing a reproduction software capable of reproducing a predetermined format of digital contents into a computer of a user;
a step of downloading the digital contents which can be reproduced by said reproduction software into said computer; and
a step of measuring time since said digital contents was downloaded into said computer and a step of deleting the digital contents from said computer if a predetermined time has elapsed,
**characterized in that** a measuring program for measuring said time and a deleting program for deleting the digital contents are incorporated in said reproduction software.

11. A rental method of a digital contents comprising: a step of installing a reproduction software capable of reproducing a predetermined format of digital contents into a computer of a user;
a step of downloading the digital contents which can be reproduced by said reproduction software into said computer; and
a step of counting the number of times of reproduction of said digital contents by said reproduction software and deleting the digital contents from said computer if a predetermined number of times is over, **characterized in that** a counting program for counting said number of times and a deleting program for deleting the digital contents are incorporated in said reproduction software.

12. A rental method of a digital contents according to claim 10 or 11, **characterized in that** said predetermined time or number of times are set when said digital contents is downloaded.

13. A rental method of a digital contents according to claim 10, 11 or 12, **characterized in that** at least one part of the stored digital contents is overwritten by said deleting program so as not be reproduced by the reproducing program.

14. A rental method of a digital contents according to claim 10, 11, 12 or 13, **characterized in that** said reproduction software can be installed into a plurality of computers of the user and said number of computers with which installation is possible is previously determined.

15. A rental method of a digital contents according to claim 10, 11, 12, 13 or 14, **characterized in that** said reproduction software comprises a dividing program for dividing the downloaded digital contents into a plurality of numbers, an encrypting program for encrypting the digital contents divided by the dividing program, and a decrypting and reproducing program for decrypting the one encrypted by the encrypting program and for reproducing the divided one in union, and one part of the divided and encrypted digital contents is incorporated in the reproduction software.

16. A rental method of a digital contents according to claim 10, 11, 12, 13, 14, or 15, **characterized in that** said server storing said digital contents has a list of the digital contents downloaded in a specific computer, compares the digital contents downloaded in the computer of the user who requested the download of the digital contents again with the digital contents in said list, permits the download of a new digital contents only when both are identical, and the computer of said user is at lease warned when both are not identical.

17. A rental method of a digital contents according to claim 16, **characterized in that** said server compares the time shown by a system clock of said computer with the time shown by a system clock of the server every time the computer of the user accesses the server and modifies the time shown by the system clock of said computer in accordance with the time shown by the system clock of the server when both are not identical.

18. A rental method of a digital contents according to claim 17, **characterized in that** when there is a difference beyond a predetermined allowance between the time shown by the system clock of said user and the time shown by the system clock of the server, the computer of the user is at least warned about that.

19. A server for renting a digital contents, **characterized in that** said server stores a plurality of predetermined format of digital contents and a reproduction software capable of reproducing said digital contents and downloads said reproduction software and the digital contents to a computer when it accesses the server, and said reproduction software measures time since the digital contents was downloaded to said computer and deletes the digital contents by a deleting program incorporated in said reproduction software if a predetermined time has elapsed.

20. A server for renting a digital contents, **characterized in that** said server stores a plurality of predetermined format of digital contents and a reproduction software capable of reproducing the digital contents and downloads said reproduction software and the digital contents to a computer of the user when it accesses the server, and said reproduction software counts the number of times of reproduction of the digital contents since it was downloaded from the server to said computer of the user, and deletes the digital contents by a deleting program incorporated in said reproduction software if a predetermined number of times is over.

21. A server for renting a digital contents according to claim 19 or 20, **characterized in that** said reproduction software can be installed in plurality of computers of users and the number of computers with which installation is possible is previously determined.

22. A server for renting a digital contents according to claim 19, 20 or 21, **characterized in that** at least one part of the stored digital contents is overwritten by said deleting program so as not be reproduced by the reproducing program.

23. A server for renting a digital contents according to claim 19, 20, 21 or 22, **characterized in that** said reproduction software comprises a dividing program for dividing the downloaded digital contents into a plurality of numbers, an encrypting program for encrypting the one divided by the dividing program, and a decrypting and reproducing program for decrypting the one encrypted by the encrypting program and for reproducing the divided one in union, and one part of the divided and encrypted digital contents is incorporated in the reproduction software.

24. A server for renting a digital contents according to claim 15, 16, 17, 18 or 19, **characterized in that** said server has a list of the digital contents downloaded in the computer of a specific user, compares the digital contents downloaded in the computer of the user who requested the download of the digital contents again with the digital contents described in said list, permits the download of a new digital contents only when both are identical, and the computer of said user is at lease warned when both are not identical.

25. A server for renting a digital contents according to claim 19, 20, 21, 22, 23 or 24, **characterized in that** said server compares the time shown by a system clock of said computer with the time shown by a system clock of the server every time the computer of the user accesses the server and modifies the time shown by the system clock of said computer in accordance with the time shown by the system clock of the server when both are not identical.

26. A server for renting a digital contents according to claim 25, **characterized in that** when there is a difference beyond a predetermined allowance between the time shown by the system clock of said user and the time shown by the system clock of the server, the computer of the user is at least warned about that warning.
